# EUROPEAN PATENT APPLICATION

(11) **EP 2 182 433 A1**
(43) Date of publication of application: **05.05.2010**
(21) Application number: 07768016.3
(22) Date of filing: 02.07.2007
(51) Int. Cl.: G06F 9/38

(54) **INDIRECT BRANCHING PROGRAM, AND INDIRECT BRANCHING METHOD**

(71) Applicant: Fujitsu Limited, Kawasaki-shi, Kanagawa 211-8588 (JP)
(72) Inventor: TOYOSHIMA, Takashi, Kawasaki-shi Kanagawa 211-8588 (JP); AOKI, Takashi, Kawasaki-shi Kanagawa 211-8588 (JP)
(74) Representative: Ward, James Norman
(86) International application number: PCT/JP2007/063241
(87) International publication number: WO 2009/004709

(57) **Abstract**

A processor 100 reads an interpreter program 200a to start an interpreter. The interpreter makes branch prediction by executing, in place of an indirect branch instruction that is necessary for execution of a source program 200b, storing branch destination addresses in the indirect branch instruction in a link register 120c (the processor 100 internally stacks the branch destination addresses also in a return address stack 130) in inverse order and reading the addresses from the return address stack 130 in one at a time manner.

## Description

### TECHNICAL FIELD

The present invention is relates to an indirect branch processing program and an indirect branch processing method of causing a computer to execute pseudo indirect branch instruction in place of indirect branch instruction.

### BACKGROUND ART

Conventionally, computers (CPU; Central Processing Unit, and the like) execute source code programs written by person with compilation or interpretation mechanisms. Compilation is a technique of converting a source code program into a computer-executable binary format by using a conversion program, called a compiler, and thereafter executing the code converted into the binary format. Interpretation is a technique of executing a special binary code, called an interpreter, on a computer so that the interpreter translates a source code program in one at a time manner and performing operations according to content as required.

In recent years, we design computers based on a technique called superscalar to increase processing speed of them. This technique premises that processing is performed with pipelining. In pipelining, processing pertaining to each instruction is divided into a plurality of stages, which are independently processed by discrete units. Therefore, if the next instruction to be executed is determined, execution of a first stage of the next instruction can be performed simultaneously with execution of a second stage of the preceding instruction, which allows high-speed execution by virtue of parallel processing with parallelism corresponding to the number of divided stages.

Meanwhile, conditions for causing pipelining to function successfully include a condition that the next instruction to be executed is determined. More specifically, an instruction 2 to be executed following an instruction 1 (in a case where instructions are to be executed in an order of the instruction 1, the instruction 2, an instruction 3, ...) is not determined before a first stage of the instruction 1 completes, the next instruction 2 cannot be executed in a parallel manner (the same goes for instructions following the instruction 2).

Such a circumstance typically occurs, for example, with branch instruction. In regard to branch instruction, until a result of an immediately-preceding instruction for making conditional branch decision (for example, compare instruction) is obtained, the next instruction to be executed remains undetermined, which obstructs pipeline operation. Therefore, processing speed of an entire computer is undesirably substantially reduced.

To prevent performance loss of pipeline operation, a technique called branch prediction has been devised and brought into practical use. A principle underlying the branch prediction is based on an idea of recording branch results of a program executed in the past and predicting an outcome of branch as an extension of the results (see, for example, Non-patent document 1).

Branch instructions include not only ordinal branch instructions but also indirect branch instructions for taking branch based on an address stored in a register. Indirect branch instruction is frequently used for implementation of the above-described interpreter and the like. However, because indirect branch instruction is a high-cost instruction for a superscalar computer, prediction methods focused on indirect branch instruction have also been studied (see, for example, Non-patent document 2 and Non-patent document 3).

A technique for applying a code written for a processor that handles only small address space to a processor that handles large address space without using indirect call is described in Patent document 1.

Non-patent document 1: John L. Hennessy and David A. Patterson. "Computer Architecture-A Quantitative Approach 3rd Eedition," MORGAN KAUFMANN PUBLISHERS, ISBN 1-55860-724-2.
Non-patent document 2: P.-Y. Chang, E. Hao, and Y. N. Patt. "Target Prediction for Indirect Jumps", In Proceedings of 24th International Symposium on Computer Architecture, pp. 274∼283, 1997.
Non-patent document 3: K. Driesen and U. HAolzle, "Accurate Indirect Branch Prediction", In Proceedings of 25th International Symposium on Computer Architecture, pp. 167∼178, 1998.
Patent document 1: Japanese Laid-open Patent Publication No. 2000-284965

### DISCLOSURE OF INVENTION

### PROBLEM TO BE SOLVED BY THE INVENTION

The above-described conventional techniques are, however, disadvantageous in that even when the next instruction to be executed subsequent to an indirect branch instruction written in a program is predicted based on branch history records, the probability that the predicted instruction is the same as an instruction that is actually executed next is low.

For such indirect branch instruction that has branch destinations differing from execution to execution, prediction cannot be made with high accuracy even with utilization of the techniques of Non-patent document 2 and Non-patent document 3. Indirect branch instructions remain to be high-cost instructions for computers that process programs by superscalar technique.

The present invention has been conceived in view of the above circumstances and aims at providing an indirect branch processing program and an indirect branch processing method by which highly accurate branch prediction can be made.

### MEANS FOR SOLVING PROBLEM

To solve the disadvantage and achieve the object, an interpreter on a computer is caused to execute a reading step of reading the source program stored in a storage device, a step of translating the source program and selecting a processing code according to content, and a step of calling the processing code selected by the code selecting step. To take a branch to the selected code, the interpreter stores addresses of selected codes in a call stack in reverse order of processed order and performs call operations by using a pseudo indirect branch instruction in place of utilizing the indirect branch instruction in the code selecting and call steps.

According to the present invention, in the above invention, in the processing-code call step, a pseudo indirect branch code that includes, in place of an indirect branch instruction that causes execution to transfer to a branch destination address stored in a general purpose register, an instruction that causes the branch destination address to be stored in the call stack and execution to transfer to the address is used as a substitute.

According to the present invention, in the above invention, the branch destination addresses in the indirect branch instruction are stored in a predetermined stack or a link register implemented in the computer to thereby indirectly update a return-address prediction table inside the computer so that branch prediction is made successfully when pseudo indirect branch is processed.

According to the present invention, in the above invention, a control statement that involves branching is written in the source program, and the pseudo indirect branch code in the interpreter includes an instruction that causes the addresses of the processing code to be stored in the call stack in inverse order in each section before a condition determining portion of the control statement is written.

### EFFECT OF THE INVENTION

According to the present invention, a computer is caused to execute a reading step of reading a source program stored in a storage device, a step of translating the source program and selecting a processing code according to content, and a step of calling the processing code selected by the code selecting step, thereby indirectly updating a return-address prediction table inside the computer so that branch prediction is made by using this prediction table during the processing-code call step. This allows to make branch prediction accurately and complete taking branch to any desired address without receiving penalty involved in the branching. Consequently, operation equivalent to the indirect branch instruction may be executed several to dozen times faster.

According to the present invention, in the step of calling the processing code that is to be executed by the computer, a pseudo indirect branch code that includes, in place of an indirect branch instruction that causes execution to transfer to a branch destination address in a general purpose register, an instruction that causes the branch destination address to be stored in the call stack and execution to transfer to the address is used as a substitute. Therefore, processing performance of the computer that executes the source program may be increased.

According to the present invention, the branch destination addresses in the indirect branch instruction are stored in a predetermined stack or a link register implemented in the computer in inverse order to thereby indirectly update a return-address prediction table inside the computer so that branch prediction is made successfully when pseudo indirect branch is processed. This may improve in accuracy in branch prediction of the computer and increase processing performance of the computer that executes the source program.

According to the present invention, a control statement that involves branching is written in the source program, and the pseudo indirect branch code in the interpreter includes an instruction that causes the branch destination addresses in the indirect branch instruction to be stored in the call stack in inverse order in each section before a condition determining portion of the control statement is written. This allows to perform pseudo indirect branch more efficiently and at higher speed.

### BRIEF DESCRIPTION OF DRAWINGS

[FIG. 1] FIG. 1 is a diagram for explaining branch processing.
[FIG. 2] FIG. 2 is a diagram for explaining multiple-branch processing and indirect branch processing.
[FIG. 3] FIG. 3 is a diagram for explaining difference between compilation and interpretation.
[FIG. 4] FIG. 4 is a flowchart depicting processes performed by a conventional interpreter.
[FIG. 5] FIG. 5 is a diagram for explaining pipelining.
[FIG. 6] FIG. 6 is a diagram for explaining how function call is executed.
[FIG. 7] FIG. 7 is a diagram illustrating an example of an interpreter that uses an indirect branch instruction.
[FIG. 8] FIG. 8 is a diagram illustrating an example of an interpreter that uses a pseudo indirect instruction.
[FIG. 9] FIG. 9 is a functional block diagram depicting the configuration of a processor according to a first embodiment.
[FIG. 10] FIG. 10 is a diagram illustrating an example of an interpreter that executes a plurality of indirect branch instructions.
[FIG. 11] FIG. 11 is a diagram illustrating a program equivalent to "call %r6" given in FIG. 10.
[FIG. 12] FIG. 12 is a diagram illustrating an example of an interpreter that executes a plurality of pseudo indirect branch instructions.
[FIG. 13] FIG. 13 is a flowchart (1) depicting a process procedure for the interpreter.
[FIG. 14] FIG. 14 is a flowchart (2) depicting the process procedure for the interpreter.
[FIG. 15] FIG. 15 is a functional block diagram depicting the configuration of a processor according to a third embodiment.

### EXPLANATIONS OF LETTERS OR NUMERALS

- 100, 300: processor
- 110, 310: memory-access control unit
- 120, 320: register
- 120a, 320a: general purpose register set
- 120b, 320b: program counter
- 120c, 320c: link register
- 130, 330: return address stack
- 140, 340: branch prediction unit
- 150, 350: decode and control unit
- 160, 360: arithmetic pipeline unit
- 200, 400: main memory
- 200a: interpreter program
- 200b, 400b: source program
- 400c: pseudo indirect branch program
- 200c, 400d: saved data
- 400a: compiler program

### BEST MODES FOR CARRYING OUT THE INVENTION

Exemplary embodiments of an indirect branch processing computer program and an indirect branch processing method according to the present invention are described in detail below with reference to the drawings. Note that the embodiments do not imply any restrictions as to this invention.

Prior to descriptions of the embodiments according to the present invention, conventional techniques related to the present invention (indirect branch instruction, interpretation and compilation, superscalar processor and pipeline operation, branch prediction, returning from a function, return address stack, interpreter support by hardware, Just In Time compilation) will be described one by one.

### Indirect branch instruction

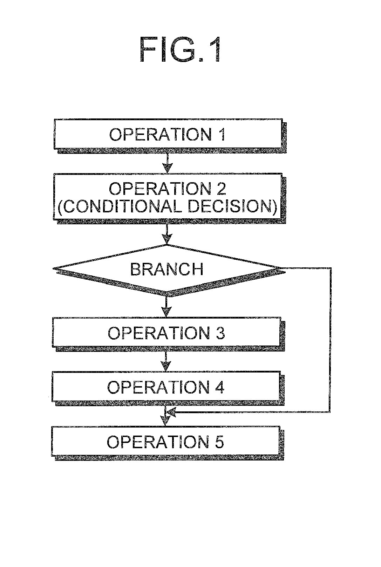

In a program that runs on a computer such as a CPU; Central Processing Unit, an instruction, called branch, is used to perform different operation depending on a result of still-in-progress processing. In a computer system, programs are arranged on memory in order and executed by a computer one after another in the arranged order. FIG. 1 is a diagram for explaining branching. In a case where a result of an immediately-preceding conditional decision meets a particular condition, when execution encounters a branch instruction, an address of the next instruction to be executed is changed to a specified memory address (in FIG. 1, transfer to operation 3 or operation 5 is to be made depending on condition). The memory address and the condition pertaining to this conditional decision instruction, or branch instruction, are fixed values that are encoded as a part of the instruction.

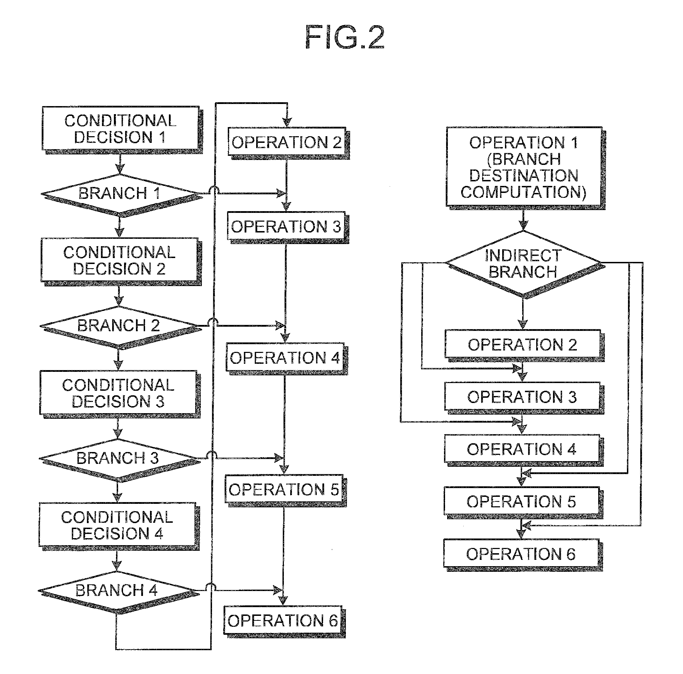

Meanwhile, there are some cases where it is desired to transfer execution to a plurality of branch destinations depending on condition. FIG. 2 is a diagram for explaining multiple-branch processing and indirect branch processing. As depicted on the left-hand side of FIG. 2, implementation by arranging conditional decisions and branches of as many types as required is possible; however, branches that involve a large number of conditional decisions are less efficient. To this end, processing called an indirect branch instruction may be employed. In this processing, a value in a register is used as the next address to be executed. More specifically, it is allowed to specify a previously calculated result itself as an address of the next instruction. This allows a program by itself to calculate an address of a branch destination instruction and take indirect branch by using the value, thereby taking branch to any desired operation (see right-hand side of FIG. 2).

### Interpretation and compilation

Schemes for executing a program that runs on a computer are broadly divided into two schemes. One is compilation and the other is the interpretation. In compilation, it is necessary to convert a program written in a source file into executable binary by using a compiler in advance. The executable binary converted by the compiler is directly executed on a computer.

In contrast, in interpretation, what is directly executed on a computer is software, called an interpreter. The interpreter translates a source file in one at a time manner and performs operations according to description of the program. Therefore, a program is processed slowly as compared to compilation. However, it also has an advantage that a same program can be utilized by computer systems even they have different designs so long as the computer systems have interpreters that follow a common specification.

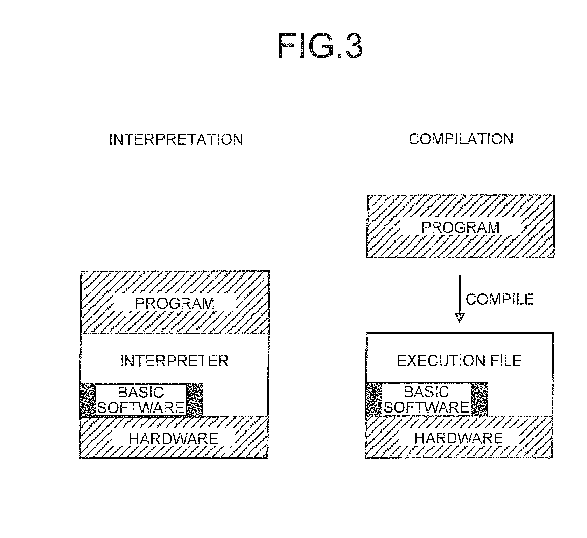

FIG. 3 is a diagram for explaining difference between compilation and interpretation. As depicted on the left-hand side of FIG. 3, in interpretation, what directly runs on hardware is basic software, or operating systems, device drivers, firmware or like that, and interpreter.
The interpreter runs while utilizing functions of the basic software. A program is translated and executed on the interpreter. Meanwhile, as depicted on the right-hand side of FIG. 3, in compilation, a program is complied to be converted into an executable file. The executable file is directly executed on hardware while utilizing functions of basic software.

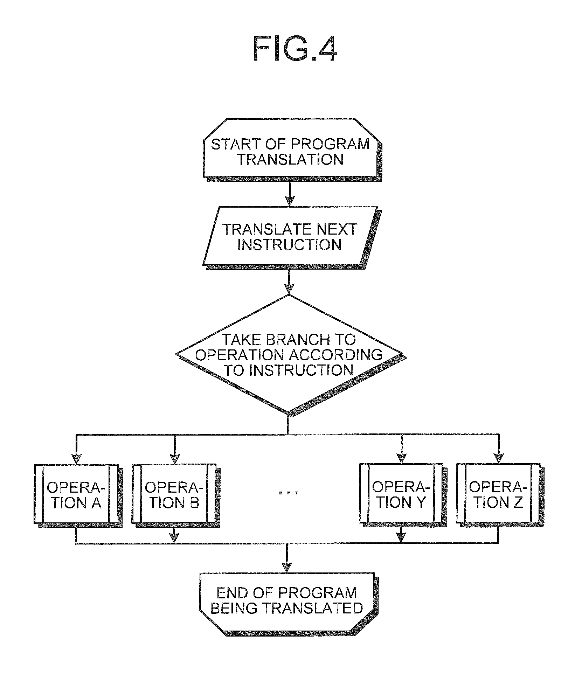

An interpreter itself is written as a single piece of software. The interpreter basically operates such that the interpreter repeatedly translates a program in one at a time manner and performs processing according its content. FIG. 4 is a flowchart depicting processes performed by a conventional interpreter. An attention is desirably focused on branch processing "branch to operation according to instruction" at the center. It is clear from FIG. 4 that this branch involves jumps to a plurality of operations (for example, it is required to jump to any one of operation A, operation B, ... , operation Y, and operation Z), making it necessary to execute indirect branch as this branch. Accordingly, operation speed of the interpreter largely depends on processing efficiency of this indirect branch.

### Superscalar processor and pipelining

Inner workings of today's high-performance computers are designed based on a technique called superscalar. This technique premises that processing is performed via pipelining. In pipelining, processing pertaining to each instruction is divided into a plurality of stages, which are independently processed by discrete units.

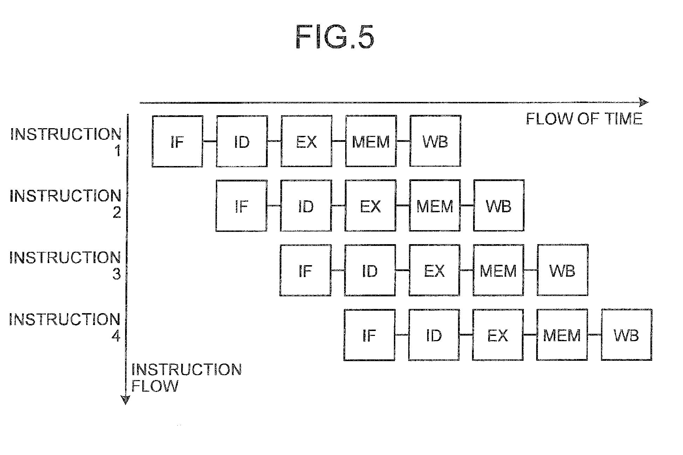

FIG. 5 is a diagram for explaining pipelining. In FIG. 5, the horizontal axis indicates flow of time and the vertical axis indicates instruction flow. In the example depicted in FIG. 5, instruction processing is divided into five stages that are IF, ID, EX, MEM, and WB. The number of stages is likely to increase in latest-model processors and division into ten-odd stages is not unusual.

A unit that processes IF (IF unit) is discussed below. This IF unit performs an operation corresponding to IF in a particular instruction and outputs its result to the subsequent ID unit. Accordingly, during execution of ID in the next cycle, there is no operation to be performed by the IF unit for the instruction. Similarly, in the next cycle in which an EX unit performs operation, there is no operation to be performed by an IF unit and an ID unit.

To utilize this, the IF unit is configured to execute IF in the next instruction in the next cycle. Even when it takes five cycles to complete processing on a single instruction, dividing and executing processing on following instructions in parallel in this manner allows a single instruction to complete every cycle in average in a long span of time. This technique that divides operations each of which requires N cycles to complete and executes them in parallel as set forth hereinabove, thereby achieving one cycle of apparent processing time, is called pipelining.

Note that conditions for causing pipelining to function successfully include a condition that the next instruction to be executed is determined. More specifically, the next instruction to be executed following the instruction 1 is not determined until the instruction 1 completes, it is not allowed to start the next instruction in parallel. Such a circumstance typically occurs, for example, with branch instruction.

In regard to branch instruction, the next instruction to be executed remains undetermined until a result of an immediately-preceding instruction for making conditional branch decision is obtained. This causes pipeline to stall, which degrades overall performance by a large degree. A technique for avoiding this is a technique called branch prediction. Branch prediction, which will be described in detail later, is described briefly. This is a scheme of predicting a result of conditional decision in advance, speculating the next instruction to be executed based on the prediction even when a result of comparison is not determined at a time of branch instruction, and advancing processing based on the speculation.

By using this scheme, in a case where prediction accuracy is sufficiently high, degradation in performance due to branching is prevented. If prediction has turned to be wrong, influence on an outcome of execution may be cancelled by discarding operations pertaining to subsequent instructions, restoring to a condition before an instruction is executed based on assumption, and executing correct instruction set in renewed manner. Details on superscalar processors are described in Document [2] (Mike Johnson. "Superscalar Microprocessor Design," Prentice-Hallm Inc, ISBN 0138756341.). Details on techniques about computers in general are described in Document [1] (John L. Hennessy, and David A. Patterson. "Computer Architecture-A Quantitative Approach 3rd Edition," MORGAN KAUFMANN PUBLISHERS, ISBN 1-55860-724-2.).

### Branch prediction

As set forth hereinabove in section "Superscalar Processor and Pipelining," making highly accurate branch prediction is an important requirement for a superscalar computer. However, only prediction that can be made prior to a result of a conditional decision in an immediate manner is useful. Furthermore, implementation by means of hardware prevents making prediction by using large-scale database. Accordingly, schemes that allow prediction as highly accurate as possible by using limited resources have been devised.

A principle underlying the branch prediction is based on an idea of recording branch results of a program executed in the past and predicting a branch result as an extension of the results. It is assumed that simple prediction that is made by storing results of several branches in the past and only according to a trend of the past branches achieves prediction accuracy of 90% or higher.

However, it is practically difficult to provide individual history records of each of all branch instructions in advance, and a method of referring to history record by using low-order bits of an instruction address of a branch instruction as an index is employed.
In this case, there can arise an unfortunate occasion where same history record is shared by a plurality of branch instructions, which results in failure in making accurate prediction.

As a scheme for increasing accuracy, a method of utilizing correlation between branches has been devised. This utilizes a fact that a result of particular branch correlates with result of branch instruction taken before reaching the particular branch instruction. These are called global branch predictions and allow prediction under a system of approximately 95%. Various schemes, such as combined use of a plurality of prediction mechanisms, have been devised to improve accuracy of branch prediction. Prediction mechanisms are described in detail from section 3.4 of Document [1]. Branch prediction is also explained in Wikipedia Japanese version "Bunki-Yosoku," at section [3] (see "Bunki-Yosoku," Wikipedia, Japanese version, http://ja.wikipedia.org/).

Meanwhile, these branch prediction methods are focused only on ordinary branch instruction. Put another way, they do not provide prediction means effective for such an indirect branch instruction that has a plurality of branch destinations. Examples of researches on prediction methods focused on indirect branch include Document [4] (P.-Y. Chang, E. Hao, and Y. N. Patt. "Target Prediction for Indirect Jumps", In Proceedings of 24th International Symposium on Computer Architecture, pp. 274∼283, 1997.) and Document [5] (K. Driesen and U. HAolzle. "Accurate Indirect Branch Prediction", In Proceedings of 25th International Symposium on Computer Architecture, pp. 167∼178, 1998.).

The Intel(R) Pentium(R) M is a processor that includes indirect branch predictor among commercial processors. Mechanism of this prediction is described in, for example, Document [6] (S. Gochman, R. Ronen, I. Anati, A. Berkovits, T. Kurts, A. Naveh, A. Saeed, Z. Sperber, and R. C. Valentine. "The Intel Pentium M Processor: Microarchitecture and Performance", Intel Technology Journal, 7(2):21∼36, 2003.).

Other than branch prediction, a method of forwarding branch target addresses in cooperation with a compiler to avoid receiving penalty without making prediction has also been studied (Document [7] (Toyoshima Takashi, Irie Hidetsugu, Goshima Masahiro, and Sakai shuichi. "Register Indirect Jump Target Forwarding", SACSIS 2006)). However, not many commercial processors include prediction mechanism that gives consideration to indirect branch. Even those equipped with such prediction mechanism have failed to make more accurate prediction than that ordinary branch instruction. Accordingly, indirect branch instruction is high-cost instruction for superscalar processors.

### Returning from a function

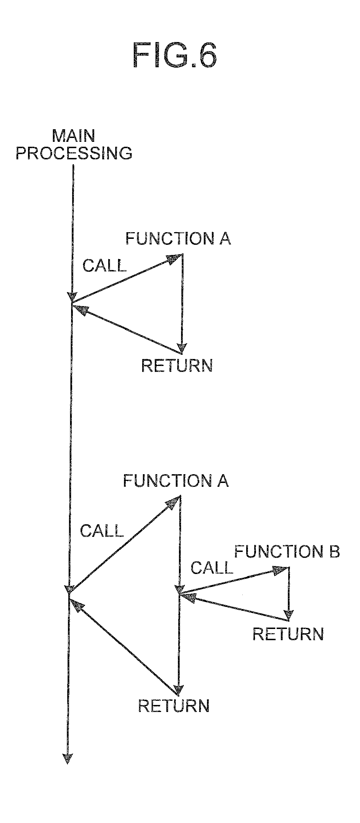

Examples of processing that requires branch of a special form include a "function call" function. FIG. 6 is a diagram for explaining how function call is executed.
The diagram depicts an example in which a function A is called from main processing and a function B is called from the function A. It is clear from FIG. 6 that the function A is called from a plurality of locations in the main processing.

Generally, a function can be called from any location in a program, and the next operation to which execution transfer when the function has been executed is the next instruction beyond a location of a caller. Put another way, returning from a function involves branch processing with a plurality of branch destinations. For this purpose, special instructions are provided in many cases; an instruction called return instruction (return instruction) is typically defined.

A return instruction requires linking associated therewith. In many computers, a branch with link instruction, called "Jump and Link," is used when calling a function. This is an instruction that takes branch while simultaneously saves an address of a currently-executed instruction in a specific location. When a return instruction is called, an address of a caller is specified by using an instruction address that is saved at this time and jump to the caller is made again. Because functions are called in a nested manner, this save location is stored in a resource having a stack structure in many cases. Alternatively, a nested call can be handled by temporarily saving an address in a specific location and saving the temporarily-saved address again by means of software before the address is overwritten by the next linking.

### Return address stack

The linking and returning are implemented by a specific instruction in many cases, and calling a function and specifying a return location may be done inside a processor. A processor in many cases internally includes a branch prediction mechanism specialized for returning so as to minimize cost of branch to be spent on the returning. All the currently-used commercial processors include this prediction mechanism without exception.

This mechanism, called return address stack, stacks a caller in an internal return address stack at linking and makes branch prediction by using an address called from this stack at returning. This return address stack is a special storage area inside the processor for use in prediction only unlike a return-address save location that is apparent in a program and likely to be written in an external specification. Examples of results of studies on the return address stack include technical commentary in Document [8] (C.F.Webb, Subroutine. "call/return stack", IBM Technical Disclosure Bulletin, 30(11):18∼20, 1988.), Document [9] (D.R.Kaeli and P.G.Emma. "Branch History Table Prediction of Moving Target Branches Due to Subroutine Returns",In Proceedings of 18th International Symposium of Computer Architecture,pages 34∼42, 1991.), and Document [10] (K.Skadron,P.S.Ahuja.M.Martonosi, and D. W.Clark. "improving Prediction for Procedure Return with Return-Address-Stack Repair Mechanism", In Proceedings of 31st International Symposium on Microarchitecture, pages 259∼271, 1998.).

### Support for interpreter by hardware

A hardware support mechanism can be provided on a computer as a mechanism for high-speed execution of an interpreter. Examples of such a mechanism include SmartMIPS(R) of MIPS Technologies, Inc. (Document [11] (MIPS Technologies Inc., "MIPS32(R) Architecture for Programmers Volume IV-d: The SmartMIPS(R) Application-Specific Extension to the MIPS32(R) Architecture",Document Number: MD00101 Revision 2.50, July 1,2005.)).

This is one of extensions for MIPS32(R) architecture and is a specification targeted for embedded system field. This extension is broadly divided into four pillars: arithmetic accelerator for cryptography, optimization of instruction density, interpreter support, and resource protection. Among them, overview of interpreter support is described in section 3.4.3 and specific instructions of the same is described in section 5.1 of Document [11].

As to this extension, CISC-like instructions are defined such that innermost loop may be implemented with use of minimum number of instructions. CISC is a computer architecture that has been mainstream before advent of superscalar and characterized by a fact that, in contrast to RISC (Reduced Instruction Set Computers) that have become mainstream today, each instruction is highly functional (Complex Instruction Set). CISC and RISC are explained in section 2.16, entitled "Reduced Instruction Set Computers" of Document [1].

### Just In Time compilation

As a scheme for high-speed implementation of an interpreter by means of software, there is a technique called Just In Time compilation. This system operates as an interpreter first to translate and execute a program while simultaneously produces simple statistical information about operation of the program. An entire portion of the program that is determined as Hot Spot (frequently executed portion) based on the statistical information is subjected to program translation at this point in time to be converted into directly-computer-executable instructions set.

Each time processing encounters a portion corresponding to the instruction from that time or later, the interpreter stops operation, and control is moved to the directly-executable instruction set. This scheme may be considered as combination of interpretation and compilation and described as a technique that may be used only when benefit of speedup brought by direct execution is compared to cost of compilation in terms and determined to sufficiently outweigh the cost. The benefit of speedup is affected by complexity of the optimization in compiling. Thus, there is a tradeoff with many aspects. This scheme requires a computer performance and large memory and hence is generally utilized in a large-scale system in many cases. First embodiment

Subsequently, a first embodiment will be described. Overview and features of a processor according to the first embodiment will be described first. An interpreter according to the first embodiment is implemented so as to, even in a circumstance where an indirect branch instruction is necessary for execution of a source program in one at a time manner, execute a pseudo indirect branch instruction in place of the indirect branch instruction.

The interpreter according to the first embodiment thus executes, even in a circumstance where an indirect branch instruction is necessary for execution of a source program in one at a time manner, the pseudo indirect branch instruction in place of the indirect branch instruction. Therefore, the processor that executes the interpreter may make branch prediction accurately and complete taking branch to any desired address without receiving penalty involved in the branching. Consequently, operation equivalent to the indirect branch instruction may be executed several to dozens times faster.

The first embodiment is discussed with use of the interpreter, but not limited thereto, and other program may be used as a substitute.

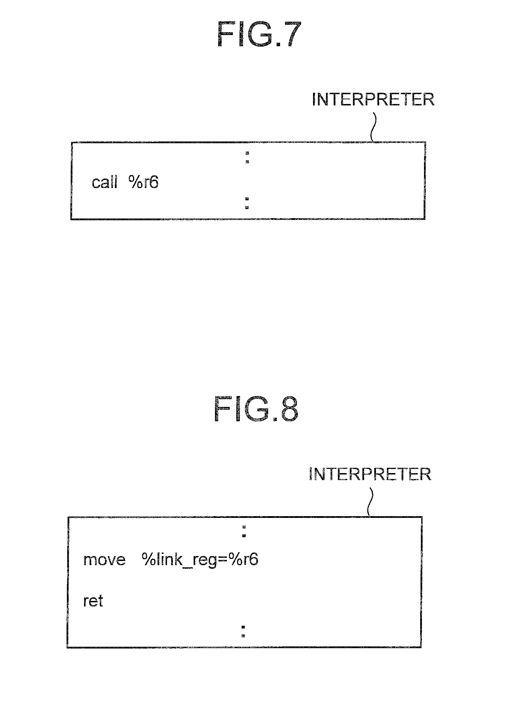

An indirect branch instruction and a pseudo indirect branch instruction, which is used in place of the indirect branch instruction, will be described based on comparison therebetween. FIG. 7 is a diagram illustrating an example of an interpreter that employs an indirect branch instruction. FIG. 8 is a diagram illustrating an example of an interpreter that employs a pseudo indirect instruction.

In FIG. 7, "call %r6" represents the indirect branch instruction. More specifically, executing "call %r6" causes an address stored in a program counter to be stored in a link register, and thereafter causes execution to transfer to a branch destination address stored in a general purpose register "r6" that is implemented in the processor. This serves as an indirect branch instruction because the branch destination varies depending on the address stored in the register "r6." Such an indirect branch instruction has failed to execute the next instruction to be executed following the branch instruction with high accuracy because branch destination addresses stored in the general purpose register cover a wide variety.

In contrast, "more %link_reg=%r6" and "ret" of FIG. 8 represent the pseudo indirect branch instruction. More specifically, the interpreter according to the first embodiment uses, even when it is necessary to use such the indirect branch instruction "call %r6" as given in FIG. 7, such the pseudo indirect branch instruction as "movie %link_reg=%r6" and "ret" given in FIG. 8 in place of the indirect branch instruction.

Executing "move %link_reg=%r6" of FIG. 8 moves a branch destination address stored in the general purpose register "r6" to a register (hereinafter, "link register"), which is implemented in the processor, that stores therein a branch source address. Although the next "ret" is an instruction for return to a branch source that is stored in the link register, in the present embodiment, the branch destination address is stored therein. Therefore, execution is transferred to the branch destination address.

Each time an address is stored in the link register, the address is stacked in order in a return address stack (for description about the return address stack, refer to the above) implemented in the processor. When returning after the branch with link instruction has been executed, the processor fetches the branch destination address stacked in the return address stack (addresses are extracted in the order in which they are stacked newly), which allows accurate prediction of a return destination address.

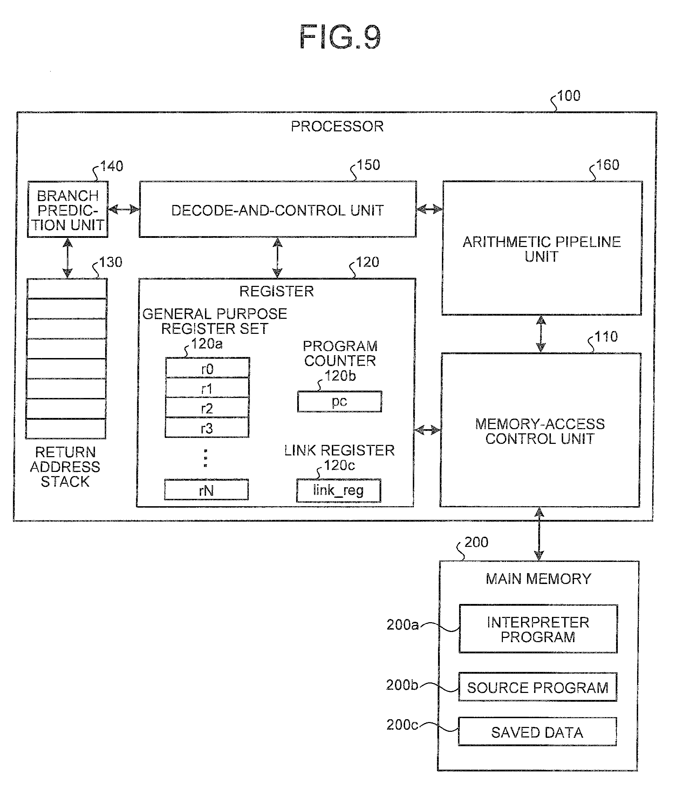

The configuration (an example of the configuration) of the processor according to the first embodiment will be described. FIG. 9 is a functional block diagram depicting the configuration of the processor according to the first embodiment. As depicted in the drawing, this processor 100 is configured to include a memory-access control unit 110, a register 120, a return address stack 130, a branch prediction unit 140, a decode-and-control unit 150, and an arithmetic pipeline unit 160.

The processor 100 is connected to a main memory 200 that stores therein various data pieces and programs and reads the various data pieces and the programs stored in the main memory 200 to perform various operations in one at a time manner.

The main memory 200 is a storage device that stores therein the various data pieces and the programs, such as an interpreter program 200a, a source program 200b, and saved data 200c that are particularly closely related to the present invention.

Among them, the interpreter program 200a is a program for reading and executing the source program 200b in one at a time manner. The processor 100 starts the interpreter by reading the interpreter program 200a stored in the main memory 200 to thereby execute the source program 200b in one at a time manner. The interpreter is implemented so as to execute, even when it is necessary to perform indirect branch in the process of executing the source program 200b in one at a time manner, a pseudo indirect branch instruction in place of an indirect branch instruction.

For example, the interpreter, which is started by the processor 100, is implemented so as to use, even when an indirect branch instruction "call %rN (N is an integer equal to or larger than 0)" (see FIG. 7) is necessary for execution of the source program 200b, a pseudo indirect branch instruction "more %link_reg=%rN" and "rest" (see FIG. 8) in place of the indirect branch instruction rather than executing the indirect branch instruction.

Subsequently, the configuration of the processor 100 will be described. The memory-access control unit 110 is a processing unit that controls data input and output to and from the main memory 200. The register 120 is a storage device that stores therein various data pieces, such as a general purpose register set 120a, a program counter 120b, and a link register 120c that are particularly closely related to the present invention.

Among them, the general purpose register set 120a is a register set that stores therein data, branch destination addresses, and the like for use in execution of various programs (such as the interpreter program 200a). In the example depicted in FIG. 9, the general purpose register set includes general purpose registers r0 to rN (N is an integer).

The program counter 120b is a register that stores therein a stored location address of the next instruction to be executed. The link register 120c is a register that stores therein a branch source address. The link register 120c may cooperate with the main memory 200 to form a pseudo stack. For example, when a new address B is to be stored in the link register 120c in a state where an address A is stored in the link register 120c, the address A is saved in the saved data 200c in the main memory 200. Put another way, the link register 120c saves an address in the saved data 200c each time the link register 120c stores therein a new address.

When, in a state where the address B is stored in the link register 120c and the address A is saved in the saved data 200c in the main memory 200, the address A is fetched from the link register 120c, operation of returning the address B saved in the saved data 200c into the link register 120c is performed. Put another way, a saved address is returned into the link register 120c each time an address stored in the link register 120c is fetched (saved addresses are returned into the link register 120c in the order in which they are saved newly).

The return address stack 130 is a register that stores therein the same address as the address stored in the link register 120c in order each time a branch source address is stored in the link register 120c. For example, when addresses are stored in the link register 120c in the following order: the address A, the address B, the address C, ..., the addresses are stored in the return address stack 130 in the following order: the address A, the address B, the address C, .... Note that the return address stack 130 is not updated when a value read from the main memory 200 is stored in the link register 120c. The reason for this is that because readout from the main memory 200 is an operation of returning a saved branch source address into the link register 120c, updating the return address stack 130 at this time disrupts correspondence between storing and fetching.

The addresses stored in the return address stack 130 are extracted in the order in which they are stored newly, by the branch prediction unit 140 and subjected to branch prediction at the time of a return instruction after execution has transferred to a subroutine.

The branch prediction unit 140 is a device that reads a branch destination address stored in the return address stack 130 to make branch prediction at the time of a return instruction. More specifically, the branch prediction unit 140 fetches the branch destination address stored in the return address stack 130 in first-in, first-out manner and determines the thus-fetched branch destination address as a branch destination address for use during the return instruction.

The decode-and-control unit 150 is a device that fetches a result of branch prediction from the branch prediction unit 140, sequentially reads instructions stored in the main memory 200 via the memory-access control unit 110 and the register 120, determines operation to be executed, and outputs a result of determination, which is a control instruction, to the arithmetic pipeline unit 160 to thereby cause the arithmetic pipeline unit 160 to perform various computations. The arithmetic pipeline unit 160 is an arithmetical device that fetches a control instruction from the decode-and-control unit 150 and performs a plurality of operations in parallel by superscalar technique. If the instruction fetched from the main memory 200 is a return instruction, the decode-and-control unit 150 calls a return address from the return address stack 130 to make branch prediction and reads the next instruction to be executed from the main memory 200 based on the prediction. A control instruction for processing the return instruction is sent to the arithmetic pipeline unit 160. The arithmetic pipeline unit 160 fetches the control instruction from the decode control unit 150, reads the return instruction, or the address stored in the link register 120c, and notifies the decode-and-control unit 150 that this address is the address of the next instruction to be fetched and translated.

By inserting a sufficiently large number of instructions between "move" instruction and "ret" instruction, which are the instructions that make up the pseudo indirect branch depicted in FIG. 8, a value written in the register 120 may be stacked in the return address stack 130. This leads to making correct prediction of a return destination for execution of a return instruction.

As set forth hereinabove, the processor 100 according to the first embodiment reads the interpreter program 200a stored in the main memory 200 to start the interpreter, in which the interpreter program 200a is implemented so as to store, even in a circumstance where an indirect branch instruction is necessary for the interpreter program 200a to execute the source program 200b, a branch destination address in the link register 120c by using the pseudo indirect branch instruction in place of the indirect branch instruction. Therefore, accurate branch prediction may be made and branch taking to any desired address may be completed without receiving penalty involved in the branching.

### Second embodiment

Although the first embodiment has been discussed by way of an example in which the interpreter executes the pseudo indirect branch instruction in place of the single indirect branch instruction, in a second embodiment, an example in which when a plurality of indirect branch instructions are required, pseudo indirect branch instructions are executed in place of the plurality of indirect branch instructions will be described. The configuration of a processor and a main memory according to the second embodiment are similar to those of the processor 100 and the main memory 200 described in the first embodiment, the second embodiment will be described with reference to FIG. 9 as required.

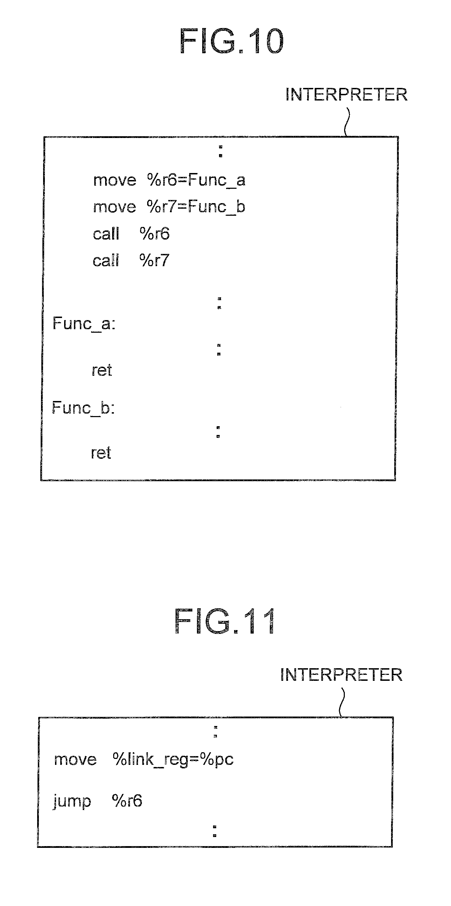

An interpreter that executes a plurality of indirect branch instructions will be taken as an example first. FIG. 10 is a diagram illustrating an example of the interpreter that executes a plurality of indirect branch instructions. Instructions given in FIG. 10 will be described one by one. Executing "move %r6=Func_a" stores an address where a function "Func_a" is to be started in the general purpose register "r6." Executing "move %r7=Func_b" stores an address where a function "Func_b" is to be started in the general purpose register "r7."

Executing "call %r6" transfers execution to the address stored in the general purpose register "r6," which causes the function "Func_a" to be executed. Executing "call %r7" transfers execution to the address stored in the general purpose register "r7," which causes the function "Func_b" to be transferred. Meanwhile, "Func_a:" to "rest" are codes for the function "Func_a" while "Func_b:" to "rest" are codes for the function "Func_b."

Operation equivalent to "call %r6" given in FIG. 10 will be described here. FIG. 11 is a diagram illustrating a program equivalent to "call %r6" given in FIG. 10. As illustrated in the drawing, the program equivalent to "call %r6" contains "move link_=%pc" and "jump %r6."

The "move link_=%pc" is an instruction for storing an address stored in the program counter 120b in the link register 120c (for the program counter 120b and the link register 120c, refer to FIG. 9). The instruction "jump %r6" causes transfer to the address stored in the general purpose register "r6" (in the example of FIG. 10, the address of the function "Funk_a") to occur. Put another way, Call instruction is an indirect-branch-with-link instruction that executes linking and indirect branch processing simultaneously.

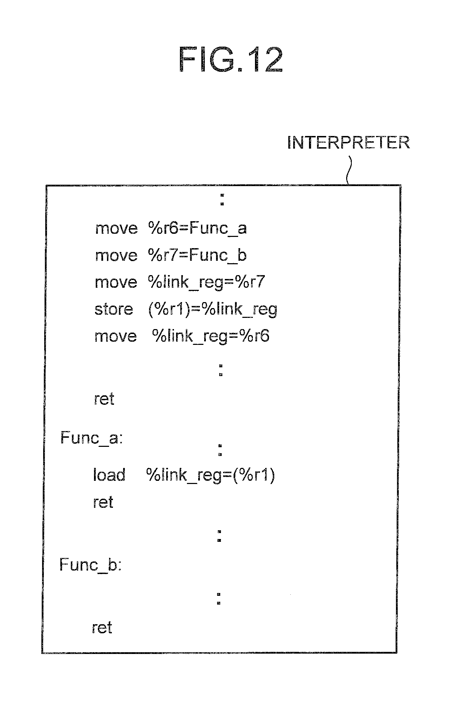

The interpreter of the second embodiment executes pseudo indirect branch instructions in place of such the plurality of indirect branch instructions as given in FIG. 10 and FIG. 11. FIG. 12 is a diagram illustrating an example of the interpreter that executes a plurality of pseudo indirect branch instructions.

Referring to FIG. 12, executing "move %r6=Func_a" stores an address where the function "Func_a" is to be started in the general purpose register "r6," and executing "move %r7=Func_b" stores an address where the function "Func_b" is to be started in the general purpose register "r7."

Executing "move %link_reg=%r7" stores the address stored in the general purpose register "r7" in the link register 120c. Executing "store (%r1)=%link_reg" saves the address stored in the link register 120c in a predetermined area in the main memory 200.

Meanwhile, "move %link_reg=%r7" is preprocessing for the pseudo indirect branch that replaces the indirect branch instruction "call %r7" given in FIG. 10. The processor 100 executes "move %link_reg=%r7" to write the address stored in the general purpose register "r7" in the link register 120c so that the address specified as a return destination address in the general purpose register "r7" is stored in the return address stack 130 inside the processor 100. This is a behavior for internal use by the processor 100 and is a behavior that is hidden from the outside.

Subsequently, executing "movie %link_reg=%r6" stores the address stored in the general purpose register "r6" in the link register 120c. Meanwhile, a binary code that executes the function "Func_a" contains, at its end, "load %link_reg=(%r1)" that stores the address saved in the predetermined area in the main memory 200 in the link register 120c and "ret" that returns execution to the previous function. Meanwhile, "Func_b:" to "ret" are codes for the function "Func_b" that includes similar codes to those of "Func_a:" to "ret."

Executing "store (%r1)=%link_reg" immediately saves the address written in the link register 120c in the main memory 200. Executing "move %link_reg=%r6" saves the address specified in the general purpose register "r6" in the link register 120c.

Execution of the instructions described above by the processor undesirably causes the address stored in the link register 120c to be overwritten; however, this does not cause the return destination addresses to be overwritten because the return address stack 130 has, as its name implies, a stack structure. The immediately following return destination address is the address stored in the general purpose register "r6" and the next return destination address is the address stored in the general purpose register "r7."

Thereafter, a return instruction transfers execution to an instruction address specified by a current value (corresponding to the value in the general purpose register "r6") in the link register 120c. This is a portion where the pseudo indirect branching is performed by using the return instruction. Subsequently, at the end of the function, the saved address is restored again in the link register 120c and a return instruction is executed.

The reason for restoring the value into the link register 120c here is that the addresses stacked in the return address stack 130 are information for use in branch prediction only. If return is executed without restoring the value in the link register 120c, execution moves to the current value in the link register 120c, or a starting line of "Func_a," simultaneously causing prediction to go wrong. Although the second branch address is stored in the link register 120c immediately before call (i.e., return), stacking in the return address stack 130 has been collectively performed before "Func_a" is called. Therefore, branch prediction by using the return address stack 130 is to be made before the decode-and-control unit 150 fetches an instruction, which allows a correct outcome.

Meanwhile, the processor 100 reads the interpreter program 200a to start the interpreter and uses the pseudo indirect branch instructions (see FIG. 12) in place of the plurality of indirect branch instructions (see FIG. 10 and FIG. 11) when the interpreter executes the source program 200b. Put another way, the processor 100 can execute the instructions without performing indirect branching.

More specifically, in a case where the interpreter is started by the processor 100, the interpreter according to the present embodiment is implemented so as to perform preprocessing for such pseudo indirect branch instructions that extract a plurality of indirect branch instructions (for example, Call instruction) that are necessary for execution of the source program 200b in inverse order (in the example given in FIG. 10, "call %r7" and "call %r6" in this order) and store branch destination addresses associated with the extracted indirect branch instructions in inverse order (in the example given in FIG. 10, "address of Func_b" and "address of Func_a" in this order).

Operations to be performed collectively as preprocessing for the replacement of the indirect branch instruction may be in a unit of a control statement (such as a conditional statement, a Switch statement, and a virtual function call) that involves branching in the source program.

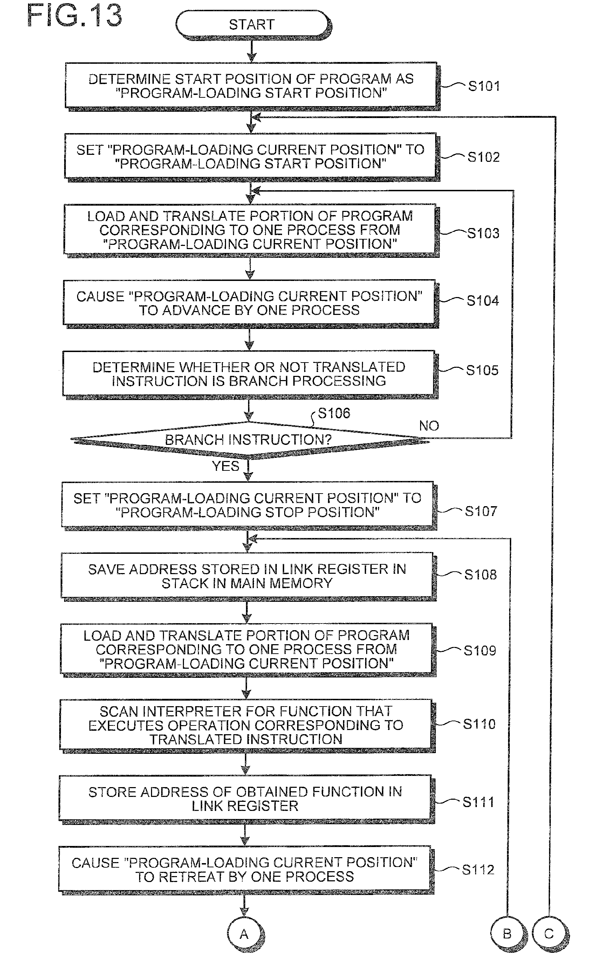

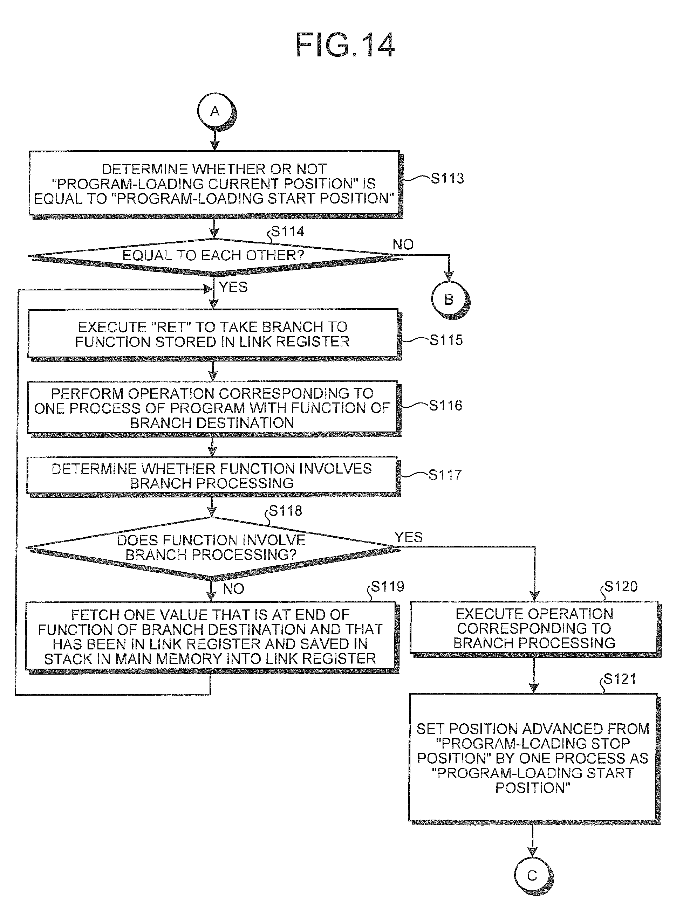

Subsequently, a process procedure for the interpreter to be started by the processor 100 according to the second embodiment by reading the interpreter program 200a stored in the main memory 200 will be described. FIG. 13 and FIG. 14 are flowcharts depicting the process procedure for the interpreter.

As depicted in the drawings, the interpreter sets a starting position of the program (source program) as a "program-loading start position" (Step S101), sets the "program-loading current position" to a "program-loading start position" (Step S102), and loads and translates a portion of the program corresponding to one process from the "program-loading current position" (Step S103).

The interpreter causes the "program-loading current position" to advance by the one process (Step S104), and determines whether or not the translated instruction is branch processing (Step S105). If the translated instruction is not branch processing (Step S106, No), execution transfers to Step S103.

On the other hand, if the translated instruction is branch processing (Step S106, Yes), the "program-loading current position" is set to a "program-loading stop position" (Step S107), an address stored in the link register 120c is saved in a stack in the main memory 200 (Step S108), and a portion of the program corresponding to one process is loaded and translated from the "program-loading current position" (Step S109).

Subsequently, the interpreter is scanned for a function that executes operation corresponding to the translated instruction (Step S110), an address of the thus-obtained function is stored in the link register 120c (Step S111), and the "program-loading current position" is retreated by one process (Step S112).

The interpreter determines whether or not the "program-loading current position" is equal to the "program-loading start position" (Step S113). If it is determined they are not equal to each other (Step S114, No), execution transfers to Step S108.

If it is determined that the "program-loading current position" is equal to the "program-loading start position" (Step S114, Yes), the "ret" instruction is executed to take branch to the function stored in the link register 120c (Step S115).

The interpreter performs the operation corresponding to the one process of the program with a function of a branch destination (Step S116), determines whether or not the function involves branch processing (Step S117). If branch processing is not to be performed (Step S118, No), the interpreter fetches one value that is at the end of the function of the branch destination and that has been in the link register 120c and saved in the stack in the main memory 200 into the link register (Step S119), and execution transfers to Step S115.

If the function involves branch processing (Step S118, Yes), a function corresponding to branch processing is executed (Step S120), a position advanced from the "program-loading stop position" by one process is set as the "program-loading start position" (Step S121), and execution transfers to Step S120.

The interpreter is implemented so as to execute the pseudo indirect branch in place of the indirect branch instructions in this manner. Therefore, speedup of loops most frequently executed by the interpreter is expected, and performance of not only the indirect branch instruction alone but also the entire program is likely to increase greatly.

As set forth hereinabove, the processor 100 according to the second embodiment starts the interpreter by reading the interpreter program 200a and utilizes, in place of the indirect branch instructions that are necessary for execution of the source program 200b, the pseudo indirect branch instructions that store branch destination addresses in the indirect branch instructions in the link register 120c in inverse order and take branch by using the return instruction (the processor 100 internally automatically stacks a value stored in the link register 120c in the return address stack 130). Therefore, it is possible to make branch prediction highly accurately and complete taking branch to any desired address without receiving penalty involved in the branching. Consequently, operation equivalent to the indirect branch instructions may be executed several to dozen times faster. Registering branch destination addresses collectively in the link register 120c allows to register the branch destination addresses in the link register 120c prior to actual branch processing with sufficient lead time and complete registering, which is performed by the processor 100, the data registered in the link register 120c in the return address stack 130 before the pseudo indirect branch is executed by using the return instruction. Therefore, branch prediction can be made in time (i.e., correct prediction is made).

While the first embodiment and the second embodiment have been described by way of example where the interpreter uses the pseudo indirect branch instruction in place of execution of the indirect branch instruction, such an execution scheme may be applied to a virtual machine. More specifically, even when a virtual machine (Java (trademark registered) or the like) requires an indirect branch instruction for execution of a binary, branch prediction may be made successfully by executing a pseudo indirect branch instruction in place of the indirect branch instruction to cause the processor 100 to store branch destination addresses in the return address stack 130. Third embodiment

In the first and second embodiments, the interpreter utilizes the pseudo indirect branch instruction in place of the indirect branch instruction when executing a source program in one at a time manner; however, it is possible to cause a compiler to generate a code that utilizes a pseudo indirect branch instruction in place of an indirect branch instruction.

More specifically, it is possible to speedup operation equivalent to the indirect branch instruction by causing the compiler to compile the source program to generate a program (hereinafter, referred to as "pseudo indirect branch program") that includes the pseudo indirect branch instruction in place of the indirect branch instruction and causing the processor to execute the pseudo indirect branch program.

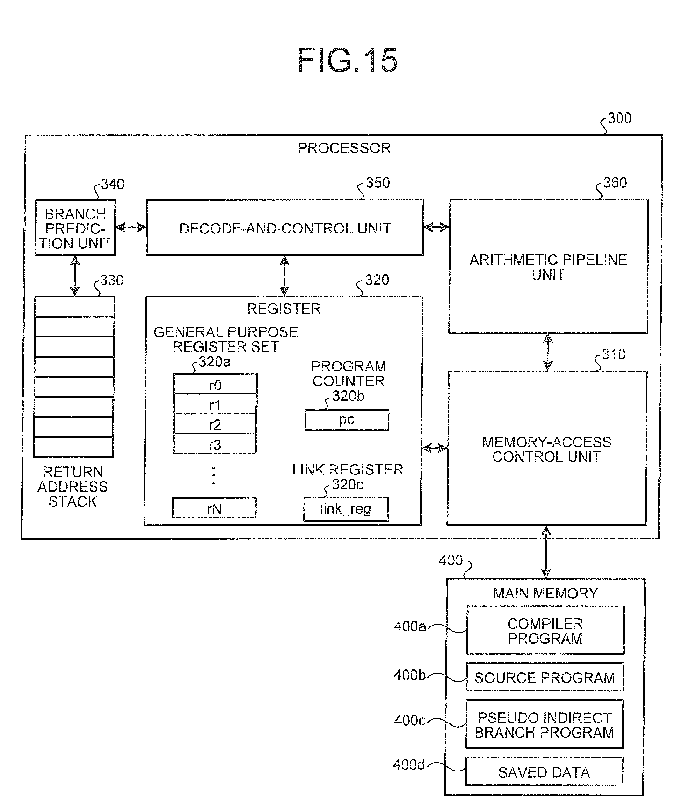

Subsequently, the configuration of the processor according to a third embodiment will be described. FIG. 15 is a functional block diagram depicting the configuration of the processor according to the third embodiment. As depicted in the drawing, this processor 300 is connected to a main memory 400 and configured to include a memory-access control unit 310, a register 320, a return address stack 330, a branch prediction unit 340, a decode-and-control unit 350, and an arithmetic pipeline unit 360.

Meanwhile, because the memory-access control unit 310, the register 320, the return address stack 330, the branch prediction unit 340, the decode-and-control unit 350, the arithmetic pipeline unit 360 correspond to the memory-access control unit 110, the register 120, the return address stack 130, the branch prediction unit 140, the decode-and-control unit 150, and the arithmetic pipeline unit 160, as depicted in FIG. 9, descriptions are omitted.

The main memory 400 is a storage device that stores therein various data pieces and programs and stores therein a compiler program 400a, a source program 400b, a pseudo indirect branch program 400c, and saved data 400d.

Among them, the compiler program 400a is a program that may be executed by the processor 300 for compilation. The compiler, when started by the processor 300, complies the source program 400b and generates the pseudo indirect branch program 400c.

When it is necessary to convert an instruction of the source program 400b into the indirect branch instruction (see FIG. 7, FIG. 10) during compilation of the source program 400b, the processor 300 that has started the compiler performs conversion into the pseudo indirect branch instruction rather than into the indirect branch instruction (see FIG. 8, FIG. 12). Put another way, the source program 400b, which would conventionally be complied as illustrated in FIG. 7, is complied as illustrated in FIG. 8. Alternatively, the source program 400b, which would conventionally be complied as illustrated in FIG. 10, is complied as illustrated in FIG. 12.

After causing the compiler to generate the pseudo indirect branch program 400c, the processor 300 reads out the pseudo indirect branch program 400c to execute operations according to the pseudo indirect branch program 400c. The pseudo indirect branch program 400c includes the pseudo indirect branch instruction in place of the indirect branch instruction, which results in speedup of operation equivalent to the indirect branch instruction.

As set forth hereinabove, the processor 300 according to the third embodiment starts the compiler to compile the source program 400b so that the pseudo indirect branch program 400c that includes the pseudo indirect branch instruction in place of the indirect branch instruction are generated, and the processor 300 executes the pseudo indirect branch program 400c. This results in speedup of operation equivalent to the indirect branch instruction.

Meanwhile, in the third embodiment, the processor 300 starts the compiler to thereby generate the pseudo indirect branch program 400c from the source program 400b; however, there is no restriction to this. The source program 400b can be compiled by a compiler device that executes compilation only to generate the pseudo indirect branch program 400c, which includes the pseudo indirect branch instruction in place of the indirect branch instruction, so that the pseudo indirect branch program 400c is executed by the processor 300 or the processor 100.

Meanwhile, among the operations described in the present embodiment, all or some operations that are described as being automatically performed may be performed manually. Alternatively, all or some operations that are described as being manually performed may be performed automatically by using known method. In addition to this, the process procedure, control procedure, specific names, information including various data pieces and parameters may be arbitrarily changed unless otherwise specified.

The configurations of the processors 100, 300 depicted in FIG. 9 and FIG. 15 are functional schematic views, and do not necessarily illustrate requirements for physical configuration. More specifically, specific mode of distribution and integration of devices are not limited to those illustrated in the drawings, and the devices can be functionally or physically distributed or integrated in any unit depending various loads, usage status, and the like.

The programs (the interpreter program 200a, the source program 200b, 400b, the compiler program 400a, and the pseudo indirect branch program 400c) stored in the memory 200, 400 of FIG. 9 and FIG. 15 are not necessarily stored in the main memory 200, 400 from the start. The programs may be recorded in advance in, for example, a "portable physical medium", which may be inserted into a computer, such as a floppy (trademark registered) disk (FD), a CD-ROM, a DVD disk, a magneto optical disk, or an IC card, "fixed-type physical medium" provided inside or outside a computer, and "another computer (or server)" connected to the computer via a public line, the Internet, a LAN, a WAN, or the like so that the computer (processor) executes the programs read from these.

Although the present invention has been described in its embodiments, the present invention can be practiced in a variety of other embodiments than the embodiments discussed hereinabove within the scope of the technical idea described in the appended claims.

### INDUSTRIAL APPLICABILITY

As set forth hereinabove, the present invention provides a high-speed implementation method for an interpreter and the like that are currently in wide use. This technique can be implemented on a currently-used computer, and cost required for implementation is not large. This is an optimization technique also effective for virtual machines such as Java (trademark registered) that has large industrial impact, and hence practically highly valuable. It is also appreciated that all programs running on an interpreter are allowed to run at high speed only by re-configuration of the interpreter.

## Claims

1. An indirect branch processing program for causing a computer to execute:
a reading step of reading a source program stored in a storage device;
a code generating step of generating a pseudo indirect branch code that includes, in place of an indirect branch instruction that is necessary for execution of the source program, an instruction that causes branch destination addresses in the indirect branch instruction to be stored in a register and/or memory in inverse order;
a storing step of causing the pseudo indirect branch code generated by the code generating step to be stored in a storage device; and
an executing step of reading and executing instructions of the pseudo indirect branch code stored in the storage device in one at a time manner.

2. The indirect branch processing program according to claim 1, wherein the code generating step generates a pseudo indirect branch code, in which an indirect branch instruction that causes execution to transfer to a branch destination address stored in a general purpose register is substituted with an instruction that causes execution to transfer to a branch destination address stored in the register and/or memory.

3. The indirect branch processing program according to claim 2, wherein the computer is caused to execute the pseudo indirect branch code, thereby indirectly causing the branch destination addresses to be stored in a predetermined storage area implemented in the computer in inverse order.

4. The indirect branch processing program according to claim 3, wherein
a control statement that involves branching is written in the source program, and
the pseudo indirect branch code includes an instruction that causes the branch destination addresses in the indirect branch instruction to be stored in a register in inverse order in each section before the control statement is written.

5. A computer-readable medium that stores therein an indirect branch processing program causing a computer to execute:
a reading step of reading a source program stored in a storage device;
a code generating step of generating a pseudo indirect branch code that includes, in place of an indirect branch instruction that is necessary for execution of the source program, an instruction that causes branch destination addresses in the indirect branch instruction to be stored in a register and/or memory in inverse order;
a storing step of causing the pseudo indirect branch code generated by the code generating step to be stored in a storage device; and
an executing step of reading and executing instructions of the pseudo indirect branch code stored in the storage device in one at a time manner.

6. The computer-readable medium according to claim 5, wherein the code generating step generates a pseudo indirect branch code, in which an indirect branch instruction that causes execution to transfer to a branch destination address stored in a general purpose register is substituted with an instruction that causes execution to transfer to a branch destination address stored in the register and/or memory.

7. The computer-readable medium according to claim 6, wherein the computer is caused to execute the pseudo indirect branch code, thereby indirectly causing the branch destination addresses to be stored in a predetermined storage area implemented in the computer in inverse order.

8. The computer-readable medium according to claim 7, wherein
a control statement that involves branching is written in the source program, and
the pseudo indirect branch code includes an instruction that causes the branch destination addresses in the indirect branch instruction to be stored in a register in inverse order in each section before the control statement is written.

9. An indirect branch processing method for a computer that reads a source program stored in a storage device to execute operation, the computer executing:
a reading process of reading the source program stored in the storage device;
a code generating process of generating a pseudo indirect branch code that includes, in place of an indirect branch instruction that is necessary for execution of the source program, an instruction that causes branch destination addresses in the indirect branch instruction to be stored in a register and/or memory in inverse order;
a storing process of causing the pseudo indirect branch code generated by the code generating process to be stored in a storage device; and
an executing process of reading and executing instructions in the pseudo indirect branch code stored in the storage device in one at a time manner.

10. An indirect branch processing program for causing a computer to execute an interpreter that translates a source program, selects a processing code according to content of the source program, and calls the processing code, the interpreter comprising:
a reading step of reading the source program stored in a storage device; and
a calling step of selecting a processing code according to the source program and, in a case where the processing code is a processing code associated with an indirect branch instruction, calling, in place of the processing code associated with the indirect branch instruction, a processing code associated with a pseudo indirect branch instruction that includes an instruction that causes branch destination addresses in the indirect branch instruction to be stored in a register and/or memory in inverse order.

11. The indirect branch processing program according to claim 10, wherein the calling step uses a processing code of the pseudo indirect branch instruction that causes execution to transfer to a branch destination address stored in the register and/or memory as a substitute for a processing code of an indirect branch instruction that causes execution to transfer to a branch destination address stored in a general purpose register.

12. The indirect branch processing program according to claim 11, wherein the computer is caused to execute a processing code of the pseudo indirect branch instruction, thereby indirectly causing the branch destination addresses to be stored in a predetermined storage area implemented in the computer in inverse order.

13. The indirect branch processing program according to claim 12, wherein
a control statement that involves branching is written in the source program, and
the processing code of the pseudo indirect branch instruction includes an instruction that causes the branch destination addresses in the indirect branch instruction to be stored in the register and/or memory in inverse order in each section before the control statement is written.

14. A computer-readable medium that stores therein an indirect branch processing program causing a computer to execute an interpreter that translates a source program, selects a processing code according to content of the source program, and calls the processing code, the interpreter comprising:
a reading step of reading the source program stored in a storage device; and
a calling step of selecting a processing code according to the source program and, in a case where the processing code is a processing code associated with an indirect branch instruction, calling, in place of the processing code associated with the indirect branch instruction, a processing code associated with a pseudo indirect branch instruction that includes an instruction that causes branch destination addresses in the indirect branch instruction to be stored in a register and/or memory in inverse order.

15. The computer-readable medium according to claim 14, wherein the calling step uses a processing code of the pseudo indirect branch instruction that causes execution to transfer to a branch destination address stored in the register and/or memory as a substitute for a processing code of an indirect branch instruction that causes execution to transfer to a branch destination address stored in a general purpose register.

16. The computer-readable medium according to claim 15, wherein the computer is caused to execute a processing code of the pseudo indirect branch instruction, thereby indirectly causing the branch destination addresses to be stored in a predetermined storage area implemented in the computer in inverse order.

17. The computer-readable medium according to claim 16, wherein
a control statement that involves branching is written in the source program, and
the processing code of the pseudo indirect branch instruction includes an instruction that causes the branch destination addresses in the indirect branch instruction to be stored in a register in inverse order in each section before the control statement is written.

18. An indirect branch processing method for causing a computer to execute an interpreter that translates a source program, selects a processing code according to content of the source program, and calls the processing code, the interpreter comprising:
a reading step of reading the source program stored in a storage device; and
a calling step of selecting a processing code according to the source program and, in a case where the processing code is a processing code associated with an indirect branch instruction, calling, in place of the processing code associated with the indirect branch instruction, a processing code associated with a pseudo indirect branch instruction that includes an instruction that causes branch destination addresses in the indirect branch instruction to be stored in a register and/or memory in inverse order.
